# EUROPEAN PATENT APPLICATION

(11) **EP 1 617 645 A1**
(43) Date of publication of application: **18.01.2006**
(21) Application number: 05106127.3
(22) Date of filing: 06.07.2005
(51) Int. Cl.: H04N 1/407, H04N 1/405

(54) **Image forming method and image forming apparatus**

(30) Priority: 12.07.2004 JP 2004204750
(71) Applicant: Konica Minolta Medical & Graphic, Inc., Tokyo 163-0512 (JP)
(72) Inventor: Shinotsuka, Shin Konica Minolta Medical, Sayama-shi, Saitama-ken 350 1321 (JP)
(74) Representative: Henkel, Feiler & Hänzel

(57) **Abstract**

An area coverage modulation image B is formed by an image forming method by the use of an area coverage modulation image A being a group of pixels which have binary data indicating a recording pixel or a non-recording pixel. The method includes (1) a step of obtaining an area coverage ratio of recording pixels in a frame in a predetermined size arranged around each of target pixels of the area coverage modulation image A, wherein a quantity of the recording pixels in the frame is counted to obtain the area coverage ratio to an entire area of the frame, and (2) a step of changing at least either binary data or a color tone of each target pixel, according to the area coverage ratio, wherein the method performs the steps on the target pixels of the area coverage modulation image A to form the area coverage modulation image B.

## Description

This application is based on Japanese Patent Application No. 2004-204750 filed on July 12, 2004, in Japanese Patent Office, the entire content of which is hereby incorporated by reference.

### FIELD OF THE INVENTION

The present invention relates to an image forming method and image forming apparatus for forming an area coverage modulation image to be used for a color proof of a print, and particularly relates to an image forming method and an image forming apparatus for obtaining a more accurate area coverage modulation image, based on an area coverage modulation image generated by a RIP (Raster Image Processor).

### BACKGROUND OF THE INVENTION

In recent years, prints are produced by full digital processing including generation of print documents, correction, and printing. In this processing, first, a print document is produced by a DTP (Desk Top Publishing) system, and then separation into colors of Y (yellow), M (magenta), C (cyan), K (black), and the like, which are process colors in printing, and binarization including making halftone-dots are performed. Thus, obtained is an area coverage modulation image being a group of binary data for respective pixels. Press-plates are directly produced from such area coverage modulation images, and printing is performed.

A color proof prior to printing is fully digitally formed as well. Specifically, a DDCP (Direct Digital Color Proofing) system capable of approximating a print including halftone dots, a RIP, and a CMS (Color Management System) are used to produce area coverage modulation images similar to those for a print, from a print document, and obtain a color proof, by an output device, finished in approximation to the print.

However, a printing machine and a DDCP system adopt completely different output methods. Therefore, if the same area coverage modulation image is used, difference in dot-gain or the like due to the difference in the output methods cannot be reflected in the area coverage modulation image. Further, effects by dot-gain in the print change also with halftone-dot percentages in the respective image areas. Still further, color tones also change due to the difference in coloring materials. Therefore, an area coverage modulation image for DDCP output is usually produced by RIP processing different from that for a printing machine.

However, as a result, the angle, the number of lines, the shape, and the like of halftone-dots in an area coverage modulation image are sometimes different from those of an area coverage modulation image for a print. Further, processing time is required to obtain an area coverage modulation image for DDCP output, and defects such as character garbling may be caused by using a different RIP.

Herein, Patent Document 1 discloses an image conversion method for obtaining a binary area coverage modulation image for a proof having the same halftone-dot structures as those for printing as much as possible and being expressed in colors to be the same as much as possible. By this method, a binary area coverage modulation image to be used in printing is converted into a multi-value image, and then the values of the multi-value image are converted. Further, the respective pixel values of corresponding pixels of the multi-value image after and before conversion of the pixel values are compared. According to the values expressing the differences between the pixel values of the respective corresponding pixels, the area percentages of respective regions, of the original binary area coverage modulation image, corresponding to the respective pixels of the multi-value image are increased or decreased, the respective regions corresponding to the respective pixels of the multi-value image. However, in this method, the image is regularly divided into blocks 4 dots by 4 dots, which tends to cause irregularities on a proof image such as moire. To reduce such irregularities, it is also proposed to perform low spatial frequency filtering. However, this places a significant load in filtering, and further, it was difficult to completely prevent irregularities.

[Patent Document 1] TOKKAI No. 2002-290722

### SUMMARY OF THE INVENTION

An object of the invention is to provide an image forming method and the like which enable obtaining an area coverage modulation image in which a halftone-dot structure and a color tone which are similar to those of a print can be reproduced, from an area coverage modulation image to be used to produce the print, wherein the difference in halftone-dot percentage can be reflected in the result, and image irregularities can be prevented, such as moire which is not observed in the printing.

In a first aspect of the invention, there is provided an image recording method of forming an area coverage modulation image B, using an area coverage modulation image A being a group of pixels, wherein each pixel has binary data that indicates whether the pixel is a recording pixel or a non-recording pixel. The method includes the steps of (1) an area coverage ratio obtaining step of obtaining an area coverage ratio of recording pixels in a frame in a predetermined size arranged around each of target pixels of the area coverage modulation image A, wherein a quantity of the recording pixels in the frame is counted to obtain the area coverage ratio to an entire area of the frame, and (2) a changing step of changing at least either binary data or a color tone of each target pixel, according to the area coverage ratio, wherein the method performs the area coverage ratio obtaining step and the changing step on the target pixels of the area coverage modulation image A to form the area coverage modulation image B.

In a second aspect of the invention, there is provided an image forming apparatus for forming an area coverage modulation image B, using an area coverage modulation image A being a group of pixels, wherein each pixel has binary data that indicates whether the pixel is a recording pixel or a non-recording pixel. The apparatus includes (1) an area coverage ratio computing section for obtaining an area coverage ratio of recording pixels in a frame in a predetermined size arranged around each of target pixels of the area coverage modulation image A, wherein a quantity of the recording pixels in the frame is counted to obtain the area coverage ratio to an entire area of the frame, and (2) an image changing section for changing at least either binary data or a color tone of each target pixel, according to the area coverage ratio, wherein the image changing section obtains the area coverage ratio of each target pixel of the area coverage modulation image A, and changes at least either binary data or a color tone of each target pixel to form the area coverage modulation image B.

### BRIEF DESCRIPTION OF THE DRAWINGS

Fig. 1 is a schematic diagram showing a part of an area coverage modulation image A;
Fig. 2 is a conceptual diagram for illustrating a count method of an area percentage;
Fig. 3 is a conceptual diagram of a filter for detecting boundary pixels;
Fig. 4 is a conceptual diagram showing the area percentages of respective boundary pixels;
Fig. 5 is a conceptual diagram showing an example of a threshold table;
Fig. 6 is a schematic diagram showing a part of an area coverage modulation image B;
Fig. 7 is a conceptual diagram for illustrating another count method of an area percentage;
Fig. 8 is a schematic diagram showing a part of another area coverage modulation image B;
Fig. 9 is a block diagram showing an example of an outline structure of an image forming apparatus;
Fig. 10 is a truth table of an EXOR circuit;
Fig. 11 is a block diagram showing an example of another outline structure of an image forming apparatus; and
Fig. 12 is a block diagram showing an example of still another outline structure of an image forming apparatus.

### DETAILED DESCRIPTION OF THE PREFERRED EMBODIMENTS

First, preferable structures in accordance with the invention to attain an object as described above will be described below.
Item 1. An image forming method forms an area coverage modulation image B, using an area coverage modulation image A being a group of binary data of respective pixels, wherein area ratios are obtained which each halftone-dot of the area coverage modulation image A has in respective regions in a predetermined size with a boundary pixel approximately at the center of the respective regions, for respective boundary pixels located at the boundary of the halftone-dot, and the binary data of at least a portion of the boundary pixels are changed, according to the obtained area ratios.

Herein, preferably, the predetermined size is equal to or smaller than a period of the halftone-dots. Further, preferably, the boundary pixels are abutting the boundary of the halftone-dot from outside of the halftone-dot, and the change in at least a portion of the binary data is an increase in the area ratios. Still further, the change in at least a portion of the binary data is preferably an increase in the area ratios, according to a result of comparison between thresholds determined in advance for the respective area ratios and random numbers generated in the same range as an entire range of the thresholds. Yet further, preferably, the boundary pixels are abutting the boundary of the halftone-dot from inside of the halftone-dot, and the change in at least a portion of the binary data is a decrease in the area ratios. Further, the change in at least a portion of the binary data is preferably a decrease in the area ratios, according to a result of comparison between thresholds determined in advance for the respective area ratios and random numbers generated in the same range as an entire range of the thresholds.
Item 2. An image forming apparatus for forming an area coverage modulation image B from an area coverage modulation image A being a group of binary data of respective pixels, includes a boundary pixel detecting section for detecting boundary pixels located at a boundary of each halftone-dot of the area coverage modulation image A, an area ratio computing section for obtaining area ratios that each halftone-dot of the area coverage modulation image A has in respective regions in a predetermined size with a boundary pixel approximately at the center of the respective regions, for the respective boundary pixels, and an image changing section for forming the area coverage modulation image B by changing at least a portion of the binary data of the boundary pixels being at the center of the respective regions, according to the obtained area ratios.
Item 3. An image forming method forms an area coverage modulation image B, using an area coverage modulation image A being a group of binary data of respective pixels, wherein area ratios are obtained which each halftone-dot of the area coverage modulation image A has in respective regions in a predetermined size with a halftone-dot pixel approximately at the center of the respective regions, for respective halftone-dot pixels of the halftone-dot, and RGB output data having been generated through a lookup table are changed, for at least a portion of the halftone-dot pixels being the center of the respective regions, according to the obtained area ratios.
Item 4. An image forming method forms an area coverage modulation image B, using an area coverage modulation image A being a group of binary data of respective pixels, wherein area ratios are obtained which each halftone-dot of the area coverage modulation image A has in respective regions in a predetermined size with a boundary pixel approximately at a center of the respective regions, for respective boundary pixels located at a boundary of the halftone-dot, and RGB output data having been generated through a lookup table are changed, for at least a portion of the boundary pixels being the center of the respective regions, according to the obtained area ratios.

In accordance with the invention, it is possible to obtain area coverage modulation images of which color tones and halftone-dot structures are approximated to those of the area coverage modulation images for a print that is a target. A change due to the difference in halftone-dot percentages can also be reflected. Interference with the halftone-dot period does not occur in image processing, and no image irregularities such as moire are generated, which do not appear in a print.

Now, preferred embodiments of the invention will be described below, referring to the drawings. For convenience in the following description, an area coverage modulation image for printing produced via a RIP is referred to as an area coverage modulation image A, and an area coverage modulation image produced, in accordance with the invention, from the area coverage modulation image A is referred to as an area coverage modulation image B. An area coverage modulation image A is a binary image, while an area coverage modulation image B can be a binary image and can be a multi-value image for which BGR output values corresponding to respective pixels on an output device are designated.

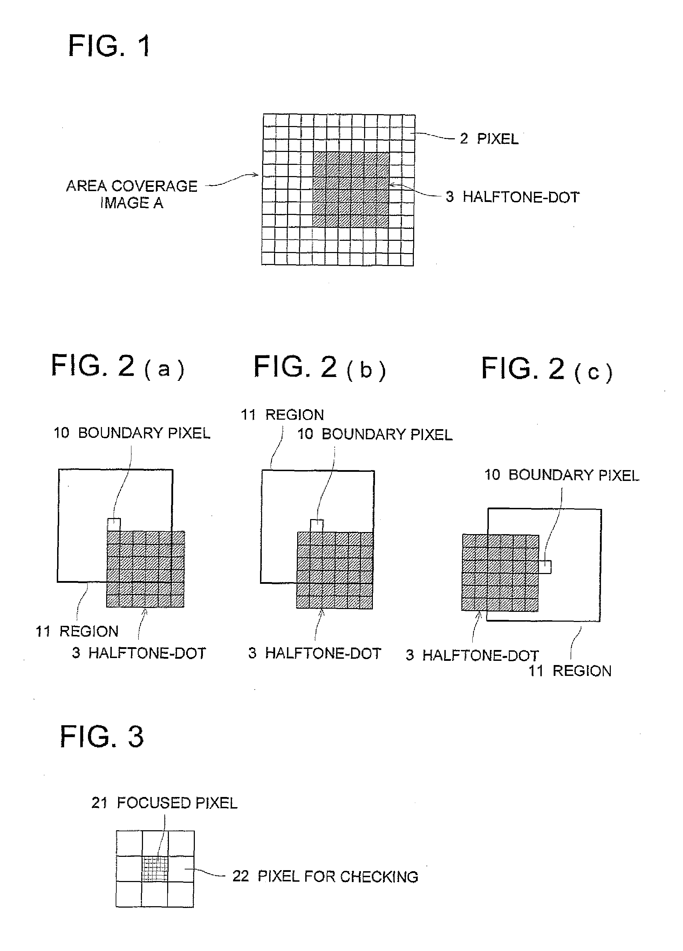

Fig. 1 is a schematic diagram showing a part of the area coverage modulation image A for printing obtained by RIP processing. The area coverage modulation image A can be expressed as a group of pixels 2, and each of the pixels are given binary data which is "1 (color developing)" or "0 (non color developing)". In Fig. 1, a group of pixels (hatched in the figure) with binary data "1 (color developing)" forms a halftone-dot 3 in an approximate square.

A print is structured by respective area coverage modulation images A of each of YMCK, and a special color plate used if necessary. Herein, however, one of those area coverage modulation images A will be described for simplicity. A halftone-dot structure will be described taking an example of AM screening, but is not limited to this. The number of screen lines of the print is assumed to be approximately 175 (The period of halftone-dots is approximately 13 to 15 pixels) in the flowing description, which is a typical case, but it is not necessary to limit the number of screen lines. The output device will be described with an assumption that the device is capable of outputting each color by BGR output in almost continuous tones in 256 stages, for example, but is not limited to this.

First, referring to Figs. 2 to 6, an image forming method will be described by which halftone-dots of the area coverage modulation image A are grown matching with the characteristics of the printing machine, wherein creation of defects such as a new moire pattern is prevented. A color tone of the image is also changed by the method. As dot-gains by the printing machine change with halftone-dot percentages in the area coverage modulation image A, the halftone-dot percentages are estimated from the area coverage modulation image A. Fig. 2 is a diagram showing a method of obtaining data of an area percentage approximately corresponding to a halftone-dot percentage of the area coverage modulation image A.

A boundary pixel 10 abutting the boundary of a halftone-dot 3 from its outside is targeted in the following description. The binary data of this boundary pixel is "0 (non color developing)". Assuming a region 11 of a square including 9 pixels x 9 pixels = 81 pixels, with this boundary pixel 10 as the center of the region 11, the number of pixels of which binary data is "1 (color developing)" is counted in this region. In Fig 2A, since the halftone-dot 3 is the only halftone-dot in this region, the count value is 4 x 5 = 20. Selection of the size of the region will be described later.

Next, in Fig. 2B, another boundary pixel 10 different from one in Fig. 2A is targeted now. The number of pixels of which binary data is "1 (color developing)" is counted likewise, in a region 11 of the same size with the pixel 10 as its center. Then, the count value is 4 x 6 = 24.
Likewise in Fig. 2C, still another boundary pixel 10 is targeted, and the number of pixels with binary data "1 (color developing)" is counted. The count value is 6 x 4 = 24.

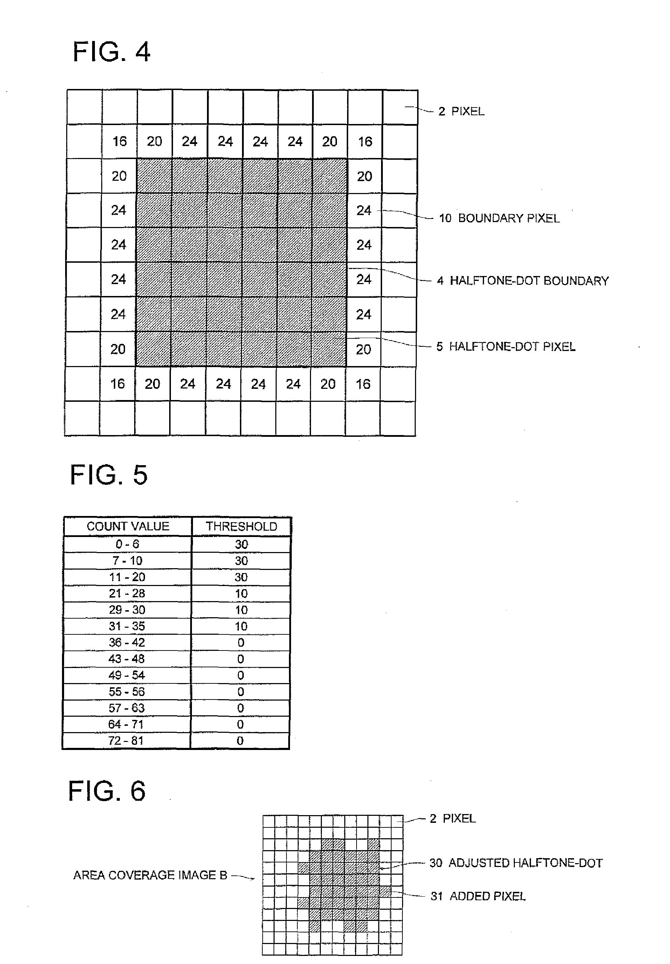

In such a manner, count values are obtained for respective boundary pixels 10 abutting the halftone-dot 3 from outside. Whether a pixel is a boundary pixel 10 or not is determined, using a filter, shown in Fig. 3. This filter checks the binary data of pixels 22 for checking which are located in the eight positions abutting a targeted pixel 21 of which binary data is "0 (non-color developing)", and if the binary data of any one of the pixels 22 for checking is "1 (color developing)", then the targeted pixel 21 is determined to be a boundary pixel 10. Herein, instead of pixels 22 located in the 8 abutting positions, the determination may be made based on pixels for checking located in the four abutting positions. Fig. 4 shows the result of obtaining the count values of boundary pixels 10 of the halftone-dot 3, shown in Fig. 1.

In Fig. 4, the halftone-dot is shown as a group of the hatched halftone-dot pixels 5, wherein count values are described inside the respective boundary pixels 10 abutting the halftone-dot from outside, sandwiching the halftone boundary 4. The count values are spread in the range from 16 to 24, wherein the values of the respective count values divided by the size (81 pixels) of the region 11 are the area percentages of the respective boundary pixels 10, which is deemed to be correlated with the halftone-dot percentage of the targeted halftone-dot. For example, the area ratio of the halftone-dot with respect to the boundary pixel 10 in Fig. 2A is 20/81. Plural area ratios are obtained because the positions of respective boundary pixels 10 have different area ratios, and the average value of them is deemed to be correlated with the intrinsic halftone-dot percentage, by which the halftone-dot percentage of the print is estimated. Herein, if the size of the region 11 is determined in advance, a count value can be directly used as an area ratio for relative evaluation of area ratios. In the following description, count values themselves are used as area ratios.

Next, a threshold table is prepared in which a certain respective threshold is given for each count value (area ratio). An example of a threshold table is shown in Fig. 5. The thresholds define the probabilities of changing the binary data from "0 (non color developing)" to "1 (color developing)" for respective boundary pixels 10 of halftone-dots. In Fig. 5, the area ratios are indicated by the count values, while the corresponding thresholds are indicated by percentages. For example, if the count value for a certain boundary 10 is in the range from 0 to 6, the probability of changing the binary data of the boundary pixel is 30%. Such a threshold table is prepared in advance, based on data according to comparison between a printing result by a printing machine and an output result by an output device of a DDCP system. In the table in Fig. 5, binary data are changed with a relatively high probability for boundary pixels of halftone-dots with smaller count values, that is relatively small halftone-dots, while binary data are not changed for boundary pixels of relatively large halftone-dots.

Next, random numbers are generated for each boundary pixel 10. The random numbers are generated in the same range of 0 to 100, matching the numbers with the range of the aforementioned probability which is 0 to 100%. These random numbers and the thresholds determined by the count values are compared. If a random number is equal to or smaller than a corresponding threshold, then the binary data of the boundary pixel is changed from original "0 (non color developing)" to "1 (color developing)". If a random number is greater than a corresponding threshold, then the binary data of the boundary pixel 10 is unchanged from original "0 (non color developing)". If a threshold is "0", then the binary data of a boundary pixel is unchanged from "0 (non color developing)" whatever the value of the random number is.

As a result, for example, if the threshold is 50% for a certain count value, binary data are changed from original "0 (non color developing" to "1 (color developing)" for half of boundary pixels of such a count value. Boundary pixels of which binary data are changed are randomly determined. If the threshold is 0% for another count value, then no binary data are changed for boundary pixels of such a count value. If the threshold is 100% for another count value, then binary data are changed for all boundary pixels of such a count value.

A thus obtained image is referred to as an area coverage modulation image B, and the area coverage modulation image B corresponding to the area coverage modulation image A in Fig. 1 is shown in Fig. 6. In the area coverage modulation image B compared with the area coverage modulation image A, some of the boundary pixels 10 develop a color to be added pixels 31 with a probability corresponding to the threshold. As a result, the adjusted halftone-dot 30 becomes larger than the original halftone-dot 3, with an expressed dot-gain.

Herein, a region with 9 x 9 = 81 pixels is set as the region 11 for counting the area ratio, with consideration of the processing load (the processing speed in software processing and the circuit scale in hardware processing), the number of lines of the image, the resolution of the image, the number of steps of the halftone-dot percentage required in adjusting the image, the sharpness of the image, and the like.

First, the size of the region 11 has effects on the resolution of processing of estimation of halftone-dot percentages of the area coverage modulation image, from the area ratio. For example, actually measuring area ratios by the use of an image having 175 lines, it is observed that for a region 11 in the size of 3 x 3, the halftone-dot percentage can be determined in two steps of approximately 0 to 50%, and 50 to 100%. For a region 11 in a size of 5 x 5, the halftone-dot percentage can be determined in three steps of approximately 0 to 30%, 30 to 70%, and 70 to 100%, in 5 steps with an increment of 20% for a size of 7 x 7, and in 10 steps with an increment of 10% for a size of 9 x 9. Therefore, the size of the region 11 is preferably larger in a viewpoint of resolution with respect to the halftone-dot percentage, with a preferable lower limit of 3 x 3 = 9 pixels.

On the other hand, since the processing load increases if the region 11 is larger, the region 11 is preferably smaller from the viewpoint of processing load. Further, the size of the region 11 is preferably a little smaller than the period of halftone-dots, by which the computation of the area ratio is less affected by the peripheral portion of the halftone-dot.

In conclusion, the size of the region 11 is preferably equal to or a little smaller than the period of halftone-dots. In the image of 175 screen lines used in the description here, the period of the halftone-dots is in a range from 13 to 15 pixels. Therefore, in the above description, pixels in the number of 9 x 9 = 81 are selected for 175 lines as the size of the region 11. The region 11 is not limited to be constructed by an odd number of pixels x an odd number of pixels, but may be constructed by an even number of pixels x an even number of pixels. In the latter case, the targeted pixel slightly deviates from the center of the region, which is not a problem. In other words, it is only required that a boundary pixel is approximately at the center of the region.

Thus, the binary data of the respective boundary pixels 10 are changed or unchanged, according to the thresholds. Therefore, a dot-gain corresponding to a printing machine can be expressed. Further, thresholds can be changed according to count values or area ratios, and accordingly, the dot-gain can be changed corresponding to the halftone-dot percentage of the halftone-dot. Further, since it can be respectively determined whether to change binary data for the boundary pixels in a probabilistic manner, problems of causing irregularities such as moiré, which does not appear on a printing, in color proofing can be avoided. In this case, added numbers of pixels for respective halftone-dots are not necessarily the same even if the halftone-dots have the same halftone-dot percentages. However, it is not a significant problem because averaging is performed in the entire image. Still further, the computation load on the CPU is in a relatively smaller range, which enables image forming in an allowed time period by a user.

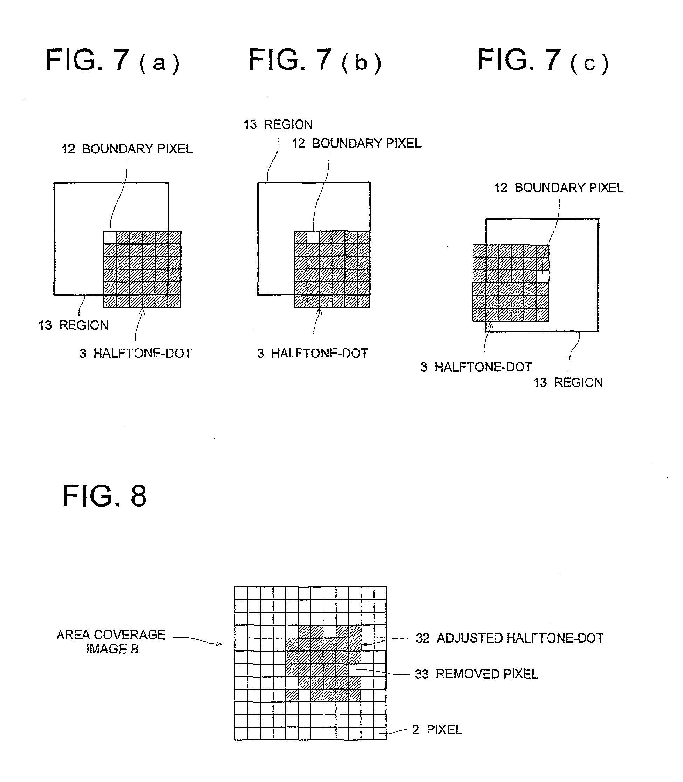

In the above description, the case where dot-gains are positive, namely, halftone-dots grow by a printing machine has been described. The case where dot-gains are negative can also be expressed likewise. This case will be described, referring to Figs. 7 and 8. As to whether to make dot-gains positive or negative, it can be determined by comparison in advance using a standard print by a printing machine and by a DDCP system, allowing selection according to printing conditions, in forming an area coverage modulation image B. For example, it may be automatically selectable via a threshold table, as described below.

In the case of making a dot-gain to be negative, instead of boundary pixels 10 abutting outside the halftone-dot 3, boundary pixels 12 inside the halftone-dot 3 are targeted, as shown in Fig. 7. With such a boundary pixel 12 as the center, a region 13 of 9 x 9 = 81 pixels is set, in which the number of pixels of which binary data are "1 (color developing)" is counted. For example, in Fig. 7A, the count value is 5 x 5 = 25. In Fig. 7B, the count value is 5 x 6 = 30. In Fig. 7C, the count value is 6 x 5 = 30.

The same type as in Fig. 3 is used as a filter for determining boundary pixels 12. Herein, checked are binary data of pixels 22 for checking located in 8 positions abutting a targeted pixel 21 of which binary data is "1 (color developing) ", and if the binary data of any of the pixels 22 for checking is "0 (non color developing)", the targeted pixel 21 is determined to be a boundary pixel 12 inside the halftone-dot.

Herein, the same threshold table as in Fig. 5 is used as a threshold. Using a sign bit of an output value from this threshold table, the sign of dot-gains is switched to be positive or negative. This switching can be set according to printing conditions. Next, random numbers are generated for respective boundary pixels 12 to be compared with corresponding thresholds. If a random number is smaller than a threshold, the binary data of a boundary pixels 12 is changed from original "1 (color developing)" to "0 (non color developing)". On the other hand, if the random number is equal to or greater than the threshold, the binary data is unchanged from original "1 (color developing)". An example of a thus obtained area coverage modulation image B is shown in Fig. 8.

In Fig. 8, in comparison with the halftone-dot 3 in Fig. 1, the binary data of some of the boundary pixels 12 inside the halftone-dot are changed to "0 (non color developing)" to be reduced pixels 33. As a result, the halftone-dot 3 becomes an adjusted halftone-dot 32. In such a manner, negative dot-gains can also be expressed, in which halftone-dots in printing become smaller.

Next, an image forming apparatus which can perform the image forming method described above. The image forming apparatus described here stores in an image memory an area coverage modulation image A for printing generated by RIP, and has a function to produce an area coverage modulation image B described above, using the area coverage modulation image A. This area coverage modulation image B is transmitted to an output device capable of outputting B (Blue), G (Green), R (Red), and the like, and a color proof is actually produced. The output device is not particularly limited as long as the device can express halftone-dot structures and adjust color tones, and may be an output device which produces a color proof by exposing a silver halide photosensitive material to light and developing it, for example.

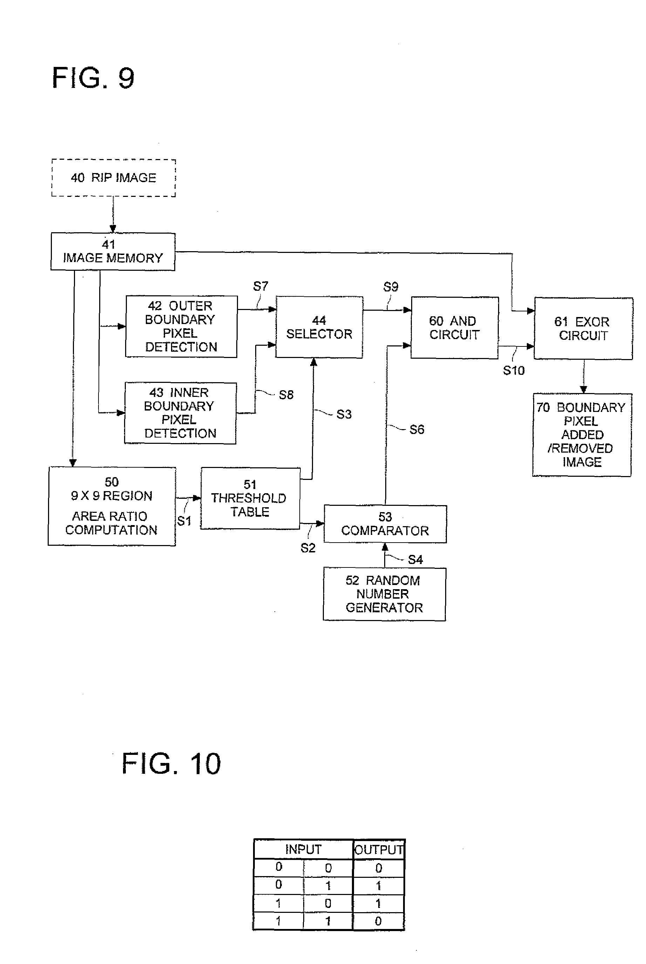

Fig. 9 is a schematic block diagram showing a hardware structure of an image forming apparatus which can obtain an area coverage modulation image B by adjusting an area coverage modulation image A, corresponding to positive or negative dot-gains described above. Description will be given below, referring to this.

The area coverage modulation image A for printing produced by a RIP is taken into an image memory 41 of the image forming apparatus to start image forming processing. First, in an area ratio computation section 50, for each pixel in the area coverage modulation image A, counted is the number of pixels with binary data "1 (color developing)" in the corresponding region of 9 x 9 = 81 pixels, with the pixel at the center of the region. Thus, data of area ratios can be obtained for all the respective pixels. The count values S1 are transmitted to a threshold table 51, according to the order of pixels. Herein, the threshold table 51 is selected in advance, according to printing conditions of a print.

Thresholds corresponding to the count values transmitted from the area coverage computation section 50 are read from the threshold table 51, and the read thresholds S2 are sequentially transmitted to a comparator 53. In such a manner, thresholds corresponding to the area ratios are sequentially obtained, for all the pixels. Further, the signal bit S3 of the threshold table 51 is transmitted to a selector 44. Thus, it is determined as to whether dot gains are to be positive or negative.

A random number generator 52 always generates random numbers S4 in the same range as the total range of the thresholds S2 and transmits the random numbers S4 to the comparator 53. The comparator 53 compares the thresholds S2 and the random numbers S4, and if a random number S4 is equal to or smaller than a threshold S2, then the comparator 53 transmits a control signal S6 of "1", and if the random number S4 is larger than a threshold S2, then the comparator 53 transmits a control signal S6 of "0", to an AND circuit 60. In such a manner, it is determined for each of all the pixels as to whether the respective binary data is to be changed or unchanged.

On the other hand, for each pixel of the area coverage modulation image A, an outer boundary pixel detecting section 42 sequentially transmits, to the selector 44, a control signal S7 representing the detection result as to whether the pixel is a boundary pixel abutting the halftone-dot boundary from outside, using the filter shown in Fig. 3. In this way, boundary pixels 10 are identified, as shown in Fig. 2. For each pixel of the area coverage modulation image A, likewise as in the case of the outer boundary pixel detecting section 42, an inner boundary pixel detecting section 43 sequentially transmits, to the selector 44, a control signal S8 representing the detection result as to whether the pixel is a boundary pixel abutting the halftone-dot boundary from inside, using a filter similar to the above describe filter shown in Fig. 3. In this way, boundary pixels 12 are identified, as shown in Fig. 7.

The selector 44 selects the control signal S7 or S8, according to a signal bit S3 transmitted from the threshold table 51, and transmits one of them as a control signal S9 to the AND circuit 60. Thus, it is selected as to whether pixels with binary data of "1" are to be arranged abutting halftone-dot boundaries from outside, corresponding to positive dot-gains, or pixels with binary data of "0" are to be arranged abutting halftone-dot boundaries from inside, corresponding to negative dot-gains. In this way, the processing is possible even in a case where dot-gains are negative.

The AND circuit 60 obtains a logical addition of the control signal S9 transmitted from the selector 44 and a control signal S6 transmitted from the selector, and transmits the result as a control signal S10 to an EXOR circuit 61. Thus, boundary pixels of which binary data are to be changed are specified.

The EXOR circuit 61 sequentially obtains an exclusive logical addition, according to the truth table, shown in Fig. 10, from the binary data of each pixel of the area coverage modulation image A and the control signal S10 transmitted from the AND circuit 60 for the same pixel. In this way, the area coverage modulation image B being a group 70 of binary data is output, wherein the pixels of halftone-dot boundaries are added or reduced. Now, the processing in the image forming apparatus is completed.

The threshold table 51, the random number generator 52, the AND circuit 60, and the EXOR circuit 61 construct an image changing section which forms an area coverage modulation image B by changing at least a portion of the binary data of the objective boundary pixels, according to the area ratio.

The binary data 70 are transmitted to an output device, not shown, and combined with binary data of other color plates. Thus, BGR outputs indicating the exposure levels of BGR are obtained from a predetermined lookup table to produce a color proof. The lookup table is a table that stores BGR output data by which respective color tones can be reproduced in color proofing, for respective color tones of halftone-dot 100% which are expressed by single printing or overprinting with printing plates, according to printing conditions. Needless to say, the BGR output data is set so that the color tones of prints can be reproduced, corresponding to increase or decrease in dot-gain.

By constructing an image forming apparatus in such a manner, the area coverage modulation image B obtained by using the area coverage modulation image A same as used in a printing machine has changes in halftone-dot structures, the changes being the same as in the case of dot-gains which change corresponding to halftone-dot percentages in a print by the printing machine, also resulting in having approximately the same color tones. Further, the processing load on the CPU is in a range with no problems, causing no moire which does not appear on the print.

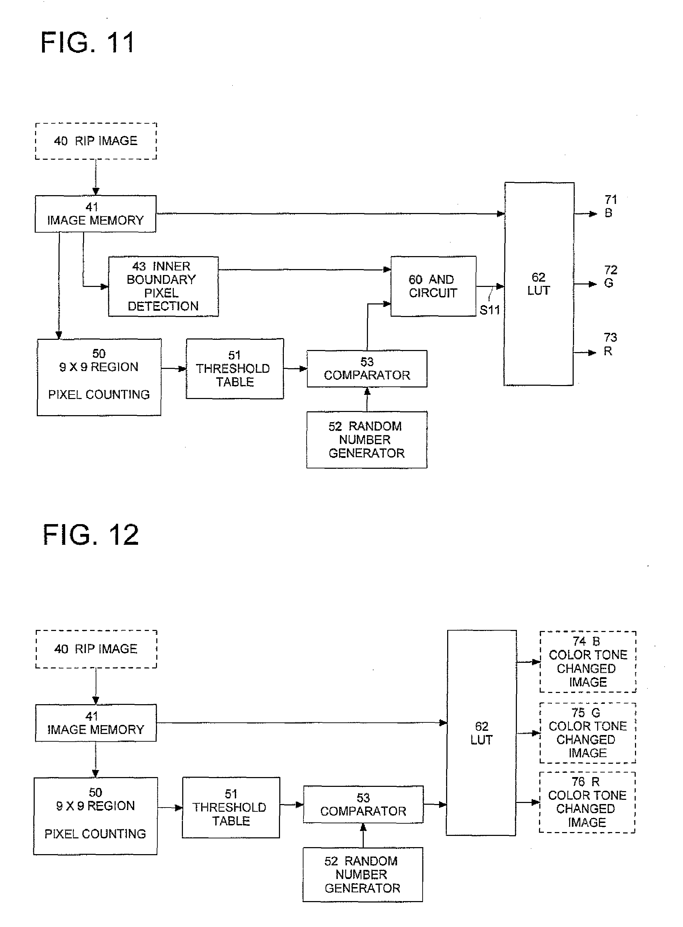

Next, an image forming method will be described in which the same area coverage modulation image A as used in a printing machine is used, and although changes in the sizes of halftone-dots by dot-gains are not adjusted to those of a print, color tones can be adjusted by changing the BGR outputs for the respective pixels, with halftone-dot structures similar to those of a print. The concept is similar to the above described method of changing binary data. Fig. 11 shows a block diagram of a schematic structure of such an image forming apparatus. Herein, the description of the image forming apparatus will focus on differences from the apparatus in Fig. 9, and an image forming method will also be described.

If compared with the apparatus structure in Fig. 9, the differences are in that the apparatus structure in Fig. 11 does not include an outer boundary pixel detecting section 42 or a selector 44 and that a lookup table (LUT) 62 is provided instead of an EXOR circuit 61. Other portions are the same as the image forming apparatus in Fig. 9. Therefore, herein, the description will be focused on the lookup table 62. Although an area coverage modulation image A of a single plate will be described for simplicity, an area coverage modulation image A of plural plates is actually used to structure an area coverage modulation image B of multiple values.

An outer boundary pixel detecting section 42 is not shown in Fig. 11, because it is assumed that change in the sizes of halftone-dots due to dot-gains in printing is not considered and color tones are adjusted to correspond to changes in color tones due to dot-gains in printing. Therefore, only boundary pixels inside the halftone-dot are taken into account as boundary pixels. It is needless to say that the color tones of boundary pixels abutting outside halftone-dots are adjusted so that changes in the sizes of the halftone-dots can be taken into account.

The lookup table 62 stores standard output data of BGR output for respective color tones of halftone-dot 100% expressed by printing with a single plate or overprinting with plural printing plates. Further, the lookup table 62 also stores BGR output data for color tone adjustment deviated from standard output data, for boundary pixels. This lookup table is different from a usual lookup table in this point. Herein, it is assumed that the lookup table 62 stores BGR output data as output data for adjustment which makes the color tones of pixels deeper than those of standard data, corresponding to the case where dot-gains are positive. To also include the case of negative dot gains, the lookup table 62 may also store BGR output data which makes the color tone of pixels lighter than standard data so that either type of BGR data, in terms of standard data or data for adjustment, can be output by switching, according to a control signal from the threshold table.

Selection whether to output the standard BGR output data or the BGR output data for adjustment is performed, according to a control signal S11 transmitted from an AND circuit 60 to the lookup table 62. Specifically, if a targeted pixel is a boundary pixel abutting a halftone-dot boundary from inside the halftone-dot and a random number generated by a random number generator 52 is equal to or smaller than a threshold read from the threshold table 51, then a control signal S11 for reading the data for adjustment is transmitted through the AND circuit 60 to the lookup table 62. In other cases, a control signal S11 for reading the standard data is transmitted. According to this control signal, the lookup table 62 individually selects the standard data or the data for adjustment for each pixel and outputs corresponding BGR output data 71 to 73. These output data are an example of the area coverage modulation image B of multiple values. These BGR output data are transmitted to an output device, not shown, to produce a color proof.

In such an apparatus, elements ranging from the threshold table 51 to the lookup table 62 construct an image changing section that constructs an area coverage modulation image B in which multiple value data are adjusted, according to the binary data and the above obtained area ratios, for at least a portion of the boundary pixels. The structure of the image changing section is not limited to this, allowing various modifications.

By having such an image forming apparatus, it is possible to obtain an area coverage modulation image B of which halftone-dot structures are approximated to those of a print and of which color tones also change according to halftone-dot percentages of the print. In a such obtained color proof, color tones change correspondingly to dot-gains and halftone-dot percentages of a print, and accordingly the color proof is extremely approximated to the print. Further, the processing load on the CPU is within a range with no problems, causing no moire which does not appear on the print.

Next, Fig. 12 is a block diagram showing a schematic structure of an image forming apparatus which does not limit pixels, of which color tones are to be adjusted, to the boundary pixels of halftone-dots, but allows it to adjust color tones at random with all pixels in the halftone-dots as the object. In this method, although the sizes of halftone-dots themselves do not change from the sizes of the halftone-dots in an area coverage modulation image A, the structure of the image forming apparatus is simplified, and further it is possible to obtain an area coverage modulation image B which is corresponding to changes in color tones due to the difference in dot-gains or halftone dot percentages.

This image forming apparatus is different form the image forming apparatus in Fig. 11 in that it does not include an inner boundary pixel detecting section 43 nor an AND circuit 60, and that output from a separator 53 is directly transmitted to a lookup table 62. In other points, it is the same as the image forming apparatus in Fig. 11. By having output from the separator 53 directly transmitted to the lookup table 62, all the pixels in halftone-dots can be the object of switching between BGR output data for adjustment by thresholds and random numbers, and standard BGR output data.

In this case, although the sizes of the halftone-dots do not change, using the same area coverage modulation image A as is used for a print, it is possible to obtain an area coverage modulation image B having halftone-dot structures and color tones similar to those of the area coverage modulation image A. Herein, since the color tones of pixels can be changed according to dot-gains and the halftone-dot percentages of the print, a color proof can be obtained which is approximated to the print. Further, the structure of the apparatus can be relatively simple, wherein the processing load on the CPU is within a range with no problems. Still further, moire is not caused which does not appear on the print.

Embodiments of the invention have been described above. However, the invention is not limited to the embodiments described above. For example, the image forming apparatus is not limited to one in which respective processing sections are constructed by hardware, but may be one in which the processing functions are implemented as software of computer programs having processing steps corresponding to the respective sections. Still further, in the example of the above described image forming apparatus, although area ratios (count values) are obtained for all the pixels, boundary pixels to be targeted may be specified in advance so that area ratios (count values) are obtained only for the specified boundary pixels.

Further, regarding area ratios, values themselves which are obtained from count values for respective pixels may be used as the area ratios as described above, or count values obtained from regions may be subjected to certain operation to be modified to obtain the area ratios. For example, an area ratio may be obtained in such a manner that count values obtained for respective pixels are averaged by a certain method which uses the count values for peripheral pixels in a certain range, and a value is obtained from the averaged value, as the area ratio. Yet further, regarding boundary pixels, not only the first row of pixels directly abutting the halftone-dot boundary, but also pixels including pixels up to the second row or third row may be taken as the object. Still further, although changes in color tones are set to be two steps for standard and adjustment, more than two steps may be set. The output device may not be a BGR output type, but may be an YMCK output type, depending on the output method of inkjet or the like.

## Claims

1. An image forming method of forming an area coverage modulation image B, using an area coverage modulation image A being a group of pixels, each pixel having binary data that indicates whether the pixel is a recording pixel or a non-recording pixel, the method comprising the steps of:
(1) an area coverage ratio obtaining step of obtaining an area coverage ratio of recording pixels in a frame in a predetermined size arranged around each of target pixels of the area coverage modulation image A, wherein a quantity of the recording pixels in the frame is counted to obtain the area coverage ratio to an entire area of the frame; and
(2) a changing step of changing at least either binary data or a color tone of each target pixel, according to the area coverage ratio,
wherein the method performs the area coverage ratio obtaining step and the changing step on the target pixels of the area coverage modulation image A to form the area coverage modulation image B.

2. The image forming method of claim 1, further comprising a boundary pixel obtaining step of obtaining boundary pixels located at a halftone-dot boundary of the area coverage modulation image A, wherein the method performs the area coverage ratio obtaining step and the changing step, assigning the respective boundary pixels located at the halftone-dot boundary as the target pixels.

3. The image forming method of claim 2, wherein, in the boundary pixel obtaining step, either pixels outside each halftone-dot boundary, the pixels being abutting the boundary on outer side of the halftone-dot, or pixels inside the boundary, the pixels being abutting the boundary on an inner side of the halftone-dot, are individually selected as the boundary pixels, according to the respective area coverage ratios.

4. The image forming method of claim 3, wherein binary data of at least a part of the selected boundary pixels outside each halftone-dot boundary are changed to increase the respective area coverage ratios.

5. The image forming method of claim 3, wherein binary data of at least a part of selected boundary pixels inside each halftone-dot boundary are changed to decrease the respective area coverage ratios.

6. The image forming method of claim 2, wherein:
exposure levels are determined for the respective pixels in advance; and
in the changing step, color tones of at least a part of the boundary pixels are changed by changing the respective exposure levels, according to the respective area coverage ratios.

7. The image forming method of claim 1, wherein:
thresholds are determined in advance for the respective area coverage ratios; and
in the changing step, random numbers corresponding to an entire range of the thresholds are generated, the thresholds and the random numbers are compared, and at least either the binary data or the color tones of the target pixels are changed, according to a result of the comparison.

8. The image forming method of claim 1, wherein:
exposure levels are determined in advance for the respective pixels; and
in the changing step, the color tones of at least a part of the pixels are changed by changing the respective exposure levels, according to the respective area coverage ratios.

9. The image forming method of claim 1, wherein the size of the frames is smaller than a period of halftone-dots of the area coverage modulation image A.

10. The image forming method of claim 1, wherein each target pixel is located at a center of the frame.

11. The image forming method of claim 1, wherein each target pixel is located adjacent to a center of the frame.

12. An image forming apparatus for forming an area coverage modulation image B, using an area coverage modulation image A being a group of pixels, each pixel having binary data that indicates whether the pixel is a recording pixel or a non-recording pixel, the apparatus comprising:
(1) an area coverage ratio computing section for obtaining an area coverage ratio of recording pixels in a frame in a predetermined size arranged around each of target pixels of the area coverage modulation image A, wherein a quantity of the recording pixels in the frame is counted to obtain the area coverage ratio to an entire area of the frame; and
(2) an image changing section for changing at least either binary data or a color tone of each target pixel, according to the area coverage ratio,
wherein the image changing section obtains the area coverage ratio of each target pixel of the area coverage modulation image A, and changes at least either binary data or a color tone of each target pixel to form the area coverage modulation image B.

13. The image forming apparatus of claim 12, further comprising a boundary pixel obtaining section for obtaining boundary pixels located at each halftone-dot boundary of the area coverage modulation image A, wherein the area coverage ratio computing section obtains the area coverage ratio of each boundary pixel located at each halftone-dot boundary as a target pixel, and the image changing section changes at least either binary data or the color tone of each target pixel.
